# EUROPÄISCHE PATENTSCHRIFT

(11) **EP 1 830 046 B1**
(45) Veröffentlichungstag und Bekanntmachung des Hinweises auf die Patenterteilung: **21.04.2021**
(21) Anmeldenummer: 07003533.2
(22) Anmeldetag: 21.02.2007
(51) Int. Cl.: F01P 7/16, F01P 3/22

(54) **ANTRIEBSEINHEIT MIT WÄRMERÜCKGEWINNUNG**
DRIVE UNIT WITH HEAT RECOVERY
UNITÉ D'ENTRAÎNEMENT DOTÉE D'UN GAIN DE RETOUR DE CHALEUR

(30) Priorität: 02.03.2006 DE 102006010247
(43) Veröffentlichungstag der Anmeldung: 05.09.2007
(73) Patentinhaber: MAN Truck & Bus SE, 80995 München (DE)
(72) Erfinder: Held, Wolfgang, Dr., 91289 Schnabelwait (DE); Raab, Gottfried, 4320 Perg (AT)
(74) Vertreter: v. Bezold & Partner Patentanwälte - PartG mbB

(56) Entgegenhaltungen:
- EP-A1- 0 101 372
- EP-A1- 1 243 758
- WO-A1-03/042515
- DE-A1- 3 111 799
- FR-A1- 2 359 974
- GB-A- 2 063 370
- JP-A- S5 696 105
- JP-A- 2003 232 226
- JP-A- 2004 232 492
- JP-A- 2005 330 811
- US-A- 5 408 843
- US-A1- 2002 056 444

## Beschreibung

### Technisches Gebiet:

Die Erfindung betrifft eine Antriebseinheit eines Kraftfahrzeugs, die über eine Brennkraftmaschine, über eine einen Niederdruckverdichter, einen Hochdruckverdichter und eine Ladeluftkühleinheit aufweisende Ladeluftzufuhr und über eine Abgasabführung, mittels der in der Brennkraftmaschine gebildetes Abgas abgeführt wird, verfügt. Ferner ist eine Kühlanlage mit wenigstens einem Kühlkreislauf vorgesehen, in dem ein von einem Arbeitsmittel durchströmbarer und von Umgebungsluft kühlbarer Wärmeübertrager, wenigstens ein in die Abgasabführung integrierter Abgaskühler und die Ladeluftkühleinheit angeordnet sind. Die Ladeluftkühleinheit weist hierbei einen Ladeluftzwischenkühler und einen Ladelufthauptkühler auf, die thermisch derart an den wenigstens einen Kühlkreislauf gekoppelt sind, dass in Strömungsrichtung der Ladeluft der Ladeluftzwischenkühler zwischen dem Niederdruck- und dem Hochdruckverdichter angeordnet ist und der Ladelufthauptkühler dem Hochdruckverdichter nachgeschaltet ist.

### Stand der Technik:

Bei der Verbrennung des Luft-Kraftstoff-Gemischs in einem Verbrennungsmotor wird neben der Umwandlung in mechanische Energie auch ein erheblicher Anteil Wärmeenergie freigesetzt. Durch die begrenzte Hitzebeständigkeit des Motors sowie der Motoranbauteile ist der Einbau einer Kühlanlage zwingend erforderlich. Die Kühlung des Motors ist einerseits mit Hilfe einer Luftkühlung und andererseits mit einer Wasserkühlung möglich.

Auf dem Gebiet der Kraftfahrzeugtechnik hat sich die Wasserkühlung weitgehend durchgesetzt. Bei der Wasserkühlung sind in der Regel der Zylinderkopf und das Zylinderkurbelgehäuse doppelwandig ausgeführt, wobei sich zwischen dieser Wandung der Wassermantel befindet, mit dem die Verbrennungswärme des Motors abgeführt wird. In der Regel setzt sich der Kühlkreislauf aus Wasserpumpe, Thermostat, Verbindungsschläuchen, Kühler, Ausgleichsbehälter und Lüfter zusammen. Als Kühlmittel wird ein Gemisch aus Wasser und 30-50 % Gefrier- und Korrosionsschutzmittel, in der Regel Ethylenglykol, verwendet. Neben der Wärmeabfuhr erfüllt das Kühlmittel die Aufgabe des Korrosionsschutzes, Anhebung der Siedetemperatur sowie Verhinderung des Einfrierens des Kühlkreislaufes. Bei Verwendung der vorbeschriebenen Kühlanlagen findet eine Wärmeübertragung einerseits an der Wand des Motors statt, wo die Motorwärme an das Kühlmittel übertragen wird, und andererseits wird die abzuführende Wärme des Kühlmittels mit Hilfe eines von Umgebungsluft umströmten Wärmeübertragers, dem so genannten Kühler, an die Umgebungsluft übertragen.

Zusätzlich zu der vorbeschriebenen Kühlmittelführung in den Kühlkreisläufen der bekannten Flüssigkeitsgekühlten Brennkraftmaschinen ist darüber hinaus aus der DE 10 2004 018 227 A1 ein Kühlsystem für Fahrzeuge mit Retarder bekannt, das zwei Kühlkreisläufe umfasst. Durch den ersten Kühlkreislauf wird der Motor und durch den zweiten parallelen Kühlkreislauf der Retarder gekühlt und die Wärme schließlich in einem gemeinsam genutzten Radiator/Kühler an die Umgebung abgegeben.

Weiterhin beschreibt die DE 197 45 758 A1 eine Verdampfungskühlung für Verbrennungsmotoren, bei der das verwendete Wasser während des Betriebs des Kühlsystems einen Phasenübergang flüssig-dampfförmig-flüssig durchläuft. Hierbei wird der Effekt ausgenutzt, dass die Wärmeübergangszahlen sowohl von der warmen Wand an die siedende Flüssigkeit als auch vom Dampf an die kalte Wand beim Kondensieren höher sind als bei Konvektion von Flüssigkeit oder gar Luft. Aus diesem Grund ermöglicht die beschriebene technische Lösung den Einsatz kleinerer Wärmeübertragerflächen und/oder den Betrieb mit geringeren Temperaturdifferenzen als bei der Konvektionskühlung.

Neben den zuvor beschriebenen Systemen sind Kühlsysteme für Kraftfahrzeuge bekannt, bei denen innerhalb des Kühlsystems unterschiedliche Arbeitsfluide eingesetzt werden. In diesem Zusammenhang ist aus der DE 42 35 883 A1 ein Kühlsystem für flüssigkeitsgekühlte Brennkraftmaschinen bekannt, das zusätzlich über einen Wärmepuffer verfügt, der über eine Wärmeübertragereinheit an den ersten Kühlkreislauf gekoppelt ist. Das Kühlsystem mit Wärmepuffer soll sicherstellen, dass die Dimensionierung der Kühlmittelmenge und des Luft-Flüssigkeits-Wärmetauschers auf Bedürfnisse des Normalbetriebs abgestimmt werden kann und dennoch eine ausreichende Abführung der Motorwärme bei Spitzenlastanforderungen gewahrt bleibt. Der Wärmepuffer enthält ein Wärmespeichermedium, das mit der Kühlflüssigkeit des Kühlkreislaufs im Wärmeaustausch steht. Hierbei ist das Wärmespeichermedium derart gewählt, dass es im oberen Betriebstemperaturbereich des Kühlmittels, höchstens jedoch 10 K oberhalb der maximal zulässigen Betriebstemperatur, einen Phasenübergang durchläuft. Überschreitet die Betriebstemperatur des Kühlmittels die Verdampfungstemperatur des Speichermediums im Wärmespeicher, so wird durch den stattfindenden Phasenübergang dem Kühlmittel eine erhebliche Wärmemenge entzogen und so bis zum vollständigen Abschluss des Phasenübergangs eine weitere Erwärmung des Kühlmittels verhindert.

Neben dem Vorsehen eines Wärmepuffers ist es darüber hinaus bekannt, einen zweiten Kühlkreislauf vorzusehen, über den unter Ausnutzung des Phasenübergangs eines Arbeitsmittels überschüssige Wärme aus dem ersten Kühlkreislauf abführbar und an wärmebenötigende Komponenten des Fahrzeugs lieferbar ist. Ein derartiges Kühlsystem ist aus der japanischen Patentschrift JP 09072255 A bekannt. Das in dieser Druckschrift beschriebene Kühlsystem verfügt über einen zweiten, vom ersten durch einen Wärmeübertrager getrennten Kühlkreislauf, in dem ein Ammoniak-Wasser-Gemisch als Arbeitsfluid umgewälzt wird. Hierbei werden die unterschiedlichen Siedepunkte des Wassers und des Ammoniaks genutzt, um dem Motorkühlkreislauf Wärme zu entziehen und um diese Wärme anderen Fahrzeugkomponenten zur Verfügung zu stellen. Die beschriebene Kühlanlage verfügt im Wesentlichen über einen Generator, in dem das Ammoniak aus dem Wasser-Ammoniak-Gemisch verdampft, über einen Phasentrenner, in dem die Flüssigkeits- von der Dampfphase getrennt wird, über einen Kondensator, in dem das Ammoniak wieder verflüssigt wird sowie über ein Drosselventil mit nachgeschaltetem weiteren Verdampfer und schließlich über einen Absorber, in dem das gasförmige Ammoniak im Wasser unter Wärmeabgabe gelöst wird. Bei dem beschriebenen Kühlsystem wird die aus dem Bereich des Motors abzuführende Wärme im Generator an das Ammoniak-Wasser-Gemisch übertragen und mit Hilfe des Kondensators zur Treibstofferwärmung verwendet.

Des Weiteren ist aus der DE 10 246 807 A1 ein Kühlsystem für Kraftfahrzeugmotoren mit Ladeluftkühlung bekannt, bei dem in einem Kühlkreislauf zwei luftgekühlte Wärmeübertrager sowie ein Ladeluftkühler vorgesehen sind. Beschrieben wird ein Kühlsystem mit einem Aggregatkühlkreislauf zur Kühlung eines Verbrennungsmotors, der einen Hauptkühlkreislauf mit Hauptkühlmittelkühler und einen Zusatzkühlkreislauf zur Kühlung eines Zusatzmediums umfasst, wobei der Zusatzkühlkreislauf an einer Auskoppelstelle vom Hauptkühlkreislauf abzweigt und zu diesem an einer Einkoppelstelle, die zwischen dem Hauptkühlmittelkühler und einer Kühlmittelförderpumpe angeordnet ist, zurückführt. Zusätzlich zu den beiden vorgenannten Kühlern ist ein Ladeluftkühler vorgesehen, mit dem die der Brennkraftmaschine zugeführte Ladeluft gekühlt wird. Wesentlich an der beschriebenen technischen Lösung ist, dass die Kühlkreisläufe auf unterschiedlichen Temperaturniveaus betreibbar sind und die Kühlmittelförderpumpe hinsichtlich des zu fördernden Volumenstroms, der Förderleistung und/oder des Förderdrucks verstellbar ist.

Die DE 31 11 799 A1 offenbart eine 1. Verbrennungskraftmaschine, der über ein Aufladegebläse hoch verdichtete Brennluft zugeführt wird. Eine mit dem Aufladegebläse verbundene Turbine ist ausschließlich über einen Rankineprozess antreibbar. Die Prozesswärme wird über Wärmetauscher eingebracht, die an den Motorölkreislauf, den Kühlwasserkreislauf und an den Abgasauslass angeschlossen sind.

Die WO 03/042515 A1 offenbart ein System zur Steuerung von Wärmeenergie, die von einem Verbrennungsmotor entwickelt wird, mit einem Hauptnetz, einer Nebenschleife und Verbindungsmitteln. Die Verbindungsmittel dienen dazu, Kältefluid auf kontrollierte Weise zwischen dem Hauptnetz und der Nebenschleife zirkulieren zu lassen. Zum Stand der Technik ist ferner hinzuweisen auf die JP 2005 330811 A, die FR 2 359 974 A1 und die EP 1 243 758 A1.

Ausgehend von dem bekannten Stand der Technik liegt der Erfindung die Aufgabe zugrunde, ein Kühlsystem für eine Antriebseinheit eines Kraftfahrzeugs mit Brennkraftmaschine anzugeben, das die effiziente Abfuhr von Wärme aus der Antriebseinheit ermöglicht und gleichzeitig sicherstellt, dass die Wärme anderen Fahrzeugkomponenten, die vor oder während des Fahrbetriebs aufgeheizt werden müssen, zur Verfügung gestellt wird. Hierbei ist insbesondere darauf zu achten, dass auch bei unterschiedlichen Betriebszuständen des Kraftfahrzeugs eine möglichst effektive Wärmeübertragung zwischen den verschiedenen Fahrzeugkomponenten ermöglicht wird, ohne dass hierfür Antriebsleistung verloren geht. Die vorstehend genannte Aufgabe wird mit einer Vorrichtung gemäß Anspruch 1 gelöst. Vorteilhafte Ausführungsformen sind Gegenstand der Unteransprüche und werden in der Beschreibung unter Bezugnahme auf die Figuren näher erläutert.

Die Erfindung betrifft eine Antriebseinheit eines Kraftfahrzeugs, die über eine Brennkraftmaschine, über eine einen Niederdruckverdichter, einen Hochdruckverdichter und eine Ladeluftkühleinheit aufweisende Ladeluftzufuhr und über eine Abgasabführung, mittels der in der Brennkraftmaschine gebildetes Abgas abgeführt wird, verfügt. Ferner ist eine Kühlanlage mit wenigstens einem Kühlkreislauf vorgesehen, in dem ein von einem Arbeitsmittel durchströmbarer und von Umgebungsluft kühlbarer Wärmeübertrager, wenigstens ein in die Abgasabführung integrierter Abgaskühler und die Ladeluftkühleinheit angeordnet sind. Die Ladeluftkühleinheit weist hierbei einen Ladeluftzwischenkühler und einen Ladelufthauptkühler auf, die thermisch derart an den wenigstens einen Kühlkreislauf gekoppelt sind, dass in Strömungsrichtung der Ladeluft der Ladeluftzwischenkühler zwischen dem Niederdruck- und dem Hochdruckverdichter angeordnet ist und der Ladelufthauptkühler dem Hochdruckverdichter nachgeschaltet ist. Erfindungsgemäß ist die Antriebseinheit derart weitergebildet worden, dass wenigstens ein erster Kühlkreislauf sowie wenigstens ein zweiter Kühlkreislauf vorgesehen sind, die mittels zumindest eines Wärmeübertragers, über den der erste und der zweite Kühlkreislauf in thermischem Kontakt stehen, hydraulisch entkoppelt sind und dass bei einem in dem zweiten Kühlkreislauf enthaltenen Arbeitsmittel während einer Betriebsphase der Kühlanlage ein zumindest teilweiser Phasenübergang herbeiführbar ist.

Mit dem vorbeschriebenem System ist es somit möglich, die Wärmerückgewinnung an verschiedenen im Bereich der Antriebseinheit vorgesehenen Wärmequellen zu realisieren. Wesentlicher Gedanke hierbei ist, dass die von den in der Antriebseinheit eines Kraftfahrzeugs vorgesehenen Wärmequellen auf verschiedenen Temperaturniveaus bereitgestellten Wärmeenergien durch eine temperaturangepasste Verschaltung dieser Komponenten und entsprechender Wärmeübertrager effektiv genutzt werden, indem eine möglichst große Menge an Wärmeenergie innerhalb der Antriebseinheit oder für entsprechende Nebenaggregate genutzt und nicht ungenutzt an die Umgebung abgegeben wird. Hierzu ist wenigstens ein Kühlkreislauf vorgesehen, in dem ein Arbeitsmittel derart erwärmt wird, dass zumindest ein teilweiser Phasenübergang bei diesem Arbeitsmittel herbeigeführt wird.

Ein integraler Bestandteil der Erfindung besteht darin, dass sowohl die im Ladeluftkühler als auch in der Abgasanlage anfallende Wärme über die Anbindung an einen Kühlkreislauf, in dem zumindest zeitweise ein dampfförmiges Arbeitsmittel enthalten ist, wieder für die Antriebseinheit sowie die vorerwähnten Nebenaggregate nutzbar gemacht wird. Innerhalb der Abgasanlage kann eine Wärmerückgewinnung an der Abgasrückführung, über die der Ladeluft zumindest teilweise Abgas zugemischt wird, und/oder an einer Stelle, die sich bspw. stromabwärts der Abgasturbolader befindet, realisiert werden. In ein derartiges Kühlkonzept können selbstverständlich weitere Wärmequellen, wie etwa ein Ölkühler oder ein Retarder, Kraftstoffkühler eingebunden werden.

Zwischen dem ersten und dem zweiten Kühlkreislauf besteht keine hydraulische Verbindung, so dass der erste und zweite Kühlkreislauf zwar thermisch gekoppelt sind, die beiden Kühlkreisläufe jedoch nicht durch einen Strömungsweg miteinander verbunden sind. Vorzugsweise handelt es sich bei dem ersten Kühlkreislauf um einen Motorkühlkreislauf, in dem die in der Brennkraftmaschine anfallende Wärme zumindest teilweise abgeführt wird. Genauso ist es denkbar, die bei der Ladeluft- und/oder Abgaskühlung abzuführende Wärme über den Motorkühlkreislauf oder einen bzw. mehrere weitere/n Kühlkreisläufe nutzbar zu machen. Je nach Anordnung der Komponenten der Antriebseinheit ist es somit möglich, die in den vorgenannten Komponenten abzuführende Wärme in einen ersten Kühlkreislauf und über wenigstens einen Wärmeübertrager in einen zweiten Kühlkreislauf zu übertragen oder die entsprechende Wärmemenge direkt in den zweiten Kühlkreislauf, über den die Wärme für Wärmesenken nutzbar gemacht wird, zu übertragen. Durch die Trennung unterschiedlicher Kühlkreisläufe in wenigstens einen ersten und wenigstens einen zweiten Kühlkreislauf ist es auf vorteilhafte Weise möglich, die Volumenströme in den einzelnen Kühlkreisläufen bedarfs- bzw. temperatur- oder kühllastangepasst zu regeln. Der zweite Kühlkreislauf wird derart betrieben, dass das in diesem Kühlkreislauf befindliche Arbeitsmittel während des Betriebs der Kühlanlage zumindest zeitweise einen Phasenübergang vollzieht.

In einer speziellen Weiterbildung der Erfindung ist im ersten Kühlkreislauf ein erstes Arbeitsmittel und im zweiten Kühlkreislauf ein zweites Arbeitsmittel vorgesehen, wobei sich das erste und das zweite Arbeitsmittel in ihren chemischen und/oder physikalischen Eigenschaften voneinander unterscheiden. Vorzugsweise weist das im zweiten Kühlkreislauf befindliche zweite Arbeitsmittel einen Verdampfungspunkt bzw. eine Verdampfungstemperatur auf, die niedriger als die Verdampfungstemperatur des ersten Arbeitsmittels ist. Weiterhin ist es denkbar, dass es sich bei dem im zweiten Kühlkreislauf geförderten Arbeitsmittel um ein Gemisch wenigstens zweier Arbeitsmittelkomponenten handelt, von denen zumindest eine Komponente eine Verdampfungstemperatur aufweist, die niedriger als die Verdampfungstemperatur des im ersten Kühlkreislauf geförderten Arbeitsmittels ist. Weiterhin ist es denkbar, dass der erste und der zweite Kühlkreislauf auf unterschiedlichen Druck- und/oder Temperaturniveaus betrieben werden.

Eine ganz spezielle Ausführungsform der vorgeschlagenen Kühlanlage sieht vor, dass in dem zweiten Kühlkreislauf ein Ammoniak-Wasser-Gemisch gefördert wird. Dieses Gemisch zeichnet sich vor allem dadurch aus, dass Ammoniak (NH₃) über eine Verdampfungstemperatur verfügt, die weit unterhalb der Verdampfungstemperatur von Wasser bei den in Kühlsystemen von Kraftfahrzeugen üblicherweise herrschenden Drücken ist. Bei den üblich angenommenen, in der Umgebung herrschenden Normalparametern verdampft Ammoniak bei etwa -33°C (ca. 240 K). Mit der zuvor beschriebenen technischen Lösung wird sichergestellt, dass der erste Kühlkreislauf auf einem Temperaturniveau von etwa 80-85°C betreibbar ist (ca. 360 K) und trotzdem bei dem im zweiten Kühlkreislauf befindlichen Arbeitsmittel zumindest teilweise ein Phasenübergang von der flüssigen in die dampf- bzw. gasförmige Phase herbeizuführen ist. Eine derart spezielle Weiterbildung der Erfindung bietet sich vor allem an, sofern die vom ersten auf den zweiten Kühlkreislauf übertragene Wärme für unterschiedliche Anwendungen bereitgestellt werden soll. Darüber hinaus werden bei der Verdampfung bzw. Kondensation des Arbeitsmittels bessere Wärmeübergangszahlen als bei reinen Konvektionsvorgängen erzielt, so dass die Wärmeübertragerflächen kleiner als bei herkömmlichen Wärmeübertragern ausgeführt werden können und/oder die Wärmeübertrager mit geringeren Temperaturspreizungen betreibbar sind.

Auf vorteilhafte Weise ist es mit dem erfindungsgemäßen Kühlsystem möglich, die im zweiten Kühlkreislauf befindliche Wärme für bestimmte, im Bereich der Antriebseinheit oder bei Nebenaggregaten vorgesehene Wärmesenken, wie beispielsweise Fahrzeugheizungen oder Klimaanlagen zu verwenden. Weiterhin ist es denkbar diese Wärme oder die vorzugsweise im Arbeitsmitteldampf gespeicherte Energie, in mechanische Arbeit, beispielsweise in Form von Rotationsenergie, zu überführen. Auf diese Weise ist es schließlich sogar möglich, diese Energie in elektrische Energie zu wandeln.

Wird das im zweiten Arbeitskreis befindliche Arbeitsmittel zumindest teilweise in eine Dampfphase überführt, so ist es etwa denkbar, diesen Dampf einer Expansionseinheit zuzuführen, damit die im Dampf enthaltene Energie in entsprechende Bewegungsenergie umgewandelt werden kann. Eine ganz spezielle Ausführungsform der Erfindung sieht darüber hinaus vor, dass die von der Expansionseinheit bereitgestellte Bewegungsenergie zur Antriebsunterstützung der Brennkraftmaschine verwendet wird. In diesem Fall wird eine mechanische Verbindung zwischen einer Abtriebswelle der Expansionseinheit und der Brennkraftmaschine mit Hilfe entsprechender Koppelelemente, wie etwa Kurbelwelle (in Art eines umgekehrten Luftpresserprinzips), Zahnradtrieb oder Riementrieb, hergestellt. Eine ganz spezielle technische Lösung sieht in diesem Zusammenhang sogar eine direkte Verbindung der Expansionseinheit mit der Antriebseinheit vor. Die Expansionseinheit verfügt in diesem Fall über dampfbetriebene Kolben, so dass mittels entsprechender Pleuelverbindungen bzw. Schubstangen die durch die Expansionsmaschine bereitgestellte mechanische Energie auf die Antriebseinheit übertragen werden kann.

In einer weiteren Ausführungsform ist vorgesehen, dass der im zweiten Kühlkreislauf befindliche Dampf, bevor er der Expansionseinheit, bei der es sich um einen Kolbenmotor, eine Expander oder eine Turbine handeln kann, zugeleitet wird, in einer Separatoreinheit von der flüssigen Phase des Arbeitsmittels getrennt wird. Wird, wie zuvor bereits erwähnt, ein Ammoniak-Wasser-Gemisch als Arbeitsmittel im zweiten Kühlkreislauf verwendet, so wird im Separator die einen großen Anteil Wasser enthaltende flüssige Phase von der dampfförmigen Ammoniak-Phase getrennt. Nachdem das Arbeitsmittel in der Expansionseinheit entspannt worden ist, wird es vorzugsweise einem Kondensator zugeleitet, in dem es unter Wärmeabgabe wieder verflüssigt wird. Sofern es sich bei dem Arbeitsmittel um ein mehrere Komponenten aufweisendes Arbeitsmittel handelt, wobei zumindest lediglich eine der Komponenten in die Dampfphase übergetreten ist, findet im Anschluss an die Kondensation des bis dahin dampfförmigen Arbeitsmittels eine Vermischung mit den flüssigen Bestandteilen des Arbeitsmittels statt. Auf diese Weise wird erneut ein flüssiges Arbeitsmittel zur Verfügung gestellt, das schließlich wieder zu dem Wärmeübertrager des zweiten Kühlkreislaufes, der thermisch mit dem ersten Kühlkreislauf in Verbindung steht, gefördert wird. Selbstverständlich ist es in diesem Zusammenhang sowohl denkbar weitere Komponenten, wie Drossel- und/oder Regelventile vorzusehen als auch weitere Wärmeübertrager, etwa zur Abfuhr der bei der Absorption eines Stoffes entstehenden Wärme, innerhalb des zweiten Kühlkreislaufs anzuordnen.

Eine weitere ganz spezielle Ausführungsform der Erfindung sieht im zweiten Kühlkreislauf eine Fördereinheit für das Arbeitsmittel vor, die in Abhängigkeit eines in einer Motorsteuerung hinterlegten Betriebspunktes oder Betriebskennfeldes betrieben wird. Hierbei ist es etwa denkbar, eine Pumpe oder einen Verdichter zu verwenden, deren/dessen Drehzahl regelbar ist und somit die im zweiten Kühlkreislauf bereitgestellte Dampfmenge einstellbar ist. Je nach Betriebszustand und Regelgröße werden die bereitgestellte Dampfmenge, insbesondere der Volumenstrom, und/oder der im zweiten Kühlkreislauf herrschende Druck variiert. Insbesondere ermöglicht die Regelung des im zweiten Kühlkreislaufes herrschenden Drucks die Bereitstellung unterschiedlicher Dampfmengen sowie die Entspannung des erzeugten Dampfes auf ein bedarfsangepasstes Druckniveau. Genauso ist es selbstverständlich möglich, den Volumenstrom des geförderten Arbeitsmittels, insbesondere den Dampfvolumenstrom, im zweiten Kühlkreislauf über die zuvor beschriebene regelbare Fördereinheit den Betriebserfordernissen anzupassen.

Alternativ zu der bereits beschriebenen Verwendung eines aus wenigstens zwei Komponenten bestehenden Arbeitsmittels im zweiten Kühlkreislauf, ist es denkbar, eine Kohlenwasserstoffverbindung mit niedriger Siede- bzw. Verdampfungstemperatur als Arbeitsmittel zu verwenden. Besonders geeignet sind in diesem Zusammenhang Butan- sowie Pentanverbindungen. Ein weiteres, besonders für die Verwendung als Arbeitsmittel im zweiten Kühlkreislauf geeignetes Medium stellt n-Perfluoro-Pentan (C₅ F₁₂) dar. Das letztgenannte Arbeitsmittel zeichnet sich hierbei vor allem dadurch aus, dass es ein nichtbrennbares so genanntes Sicherheitsarbeitsmittel darstellt. Eine Aufstellung möglicher Arbeitsmedien mit deren für die Erfindung wesentlichen physikalischen bzw. chemischen Eigenschaften ist der nachfolgenden Tabelle zu entnehmen:

| **Medium** | **Molmasse** | **Kritischer Punkt** | | **Siedetemperatur (10⁵ Pa)** | **Verdampfungswärme (10⁵ Pa)** | **Steigung der Sattdampfkurve** | **Zersetzung bei ca.** |
|---|---|---|---|---|---|---|---|
| NH3 | 17 | 405,3 K | 11,33 MPa | 239,7 K | 1347 kJ/kg | Negativ | 750 K |
| Wasser | 18 | 647,0 K | 22,06 MPa | 373,0 K | 2256 kJ/kg | Negativ | . |
| n-Butan C4H10 | 58,1 | 425,2 K | 3,80 MPa | 272,6 K | 383,8 kJ/kg | . | . |
| n-Pentan C5H12 | 72,2 | 469,8 K | 3,37 MPa | 309,2 K | 357,2 kJ/kg | . | . |
| C6H6 | 78,14 | 562,2 K | 4,90 MPa | 353,0 K | 438,7 kJ/kg | Positiv | 600 K |
| C7H8 | 92,1 | 591,8 K | 4,10 MPa | 383,6 K | 362,5 kJ/kg | Positiv | . |
| R134a (HFC-134a) | 102 | 374,2 K | 4,06 MPa | 248,0 K | 215,5 kJ/kg | Isentrop | 450 K |
| C8H10 | 106,1 | 616,2 K | 3,50 MPa | 411,0 K | 339,9 kJ/kg | Positiv | . |
| R12 | 121 | 385,0 K | 4,13 MPa | 243,2 K | 166,1 kJ/kg | Isentrop | 450 K |
| HFC-245fa | 134,1 | 430,7 K | 3,64 MPa | 288,4 K | 208,5 kJ/kg | . | . |
| HFC-245ca | 134,1 | 451,6 K | 3,86 MPa | 298,2 K | 217,8 kJ/kg | . | . |
| R11 (CFC-11) | 137 | 471,0 K | 4,41 MPa | 296,2 K | 178,8 kJ/kg | Isentrop | 420 K |
| HFE-245fa | 150 | 444,0 K | 3,73 MPa | . | . | . | . |
| HFC-236fa | 152 | 403,8 k | 3,18 MPa | 272,0 K | 168,8 kJ/kg | . | . |
| R123 | 152,9 | 456,9 K | 3,70 MPa | 301,0 K | 171,5 kJ/kg | Positiv | . |
| CFC-114 | 170,9 | 418,9 K | 3,26 MPa | 276,7 K | 136,2 kJ/kg | . | . |
| R113 | 187 | 487,3 K | 3,41 MPa | 320,4 K | 143,9 kJ/kg | Positiv | 450 K |
| n-Perfluoro-Pentan C5F12 | 288 | 420,6 K | 2,05 MPa | 302,4 K | 87,8 kJ/kg | . | . |

Die Erfindung betrifft weiterhin ein Verfahren zur Kühlung einer Antriebseinheit eines Kraftfahrzeugs,
- bei dem eine mit einer Abgasabführung versehene Brennkraftmaschine sowie eine der Brennkraftmaschine zugeführte, zumindest teilweise verdichtete Ladeluft gekühlt wird, indem die abzuführende Wärme an wenigstens ein Arbeitsmittel übertragen wird, das zu einem Wärmeübertrager gefördert und in dem Wärmeübertrager mittels Umgebungsluft abgekühlt wird,
- bei dem aus einer Umgebung angesaugte Ladeluft in einer ersten und einer zweiten Stufe verdichtet und nach der ersten und der zweiten Verdichtung abgekühlt wird,
- bei dem in der Abgasabführung befindliches Abgas zumindest teilweise gekühlt wird und
- bei dem die aus der Ladeluft und dem Abgas abgeführte Wärme an das wenigstens eine in einem Kühlkreislauf (1) geförderte Arbeitsmittel übertragen wird,
das derart weitergebildet worden ist, dass in einem ersten Kühlkreislauf ein erstes Arbeitsmittel sowie in einem zweiten Kühlkreislauf ein zweites Arbeitsmittel gefördert wird und dass das im zweiten Kühlkreislauf enthaltene zweite Arbeitsmittel zumindest teilweise in eine dampf- oder gasförmige Phase überführt wird.

Auch das ausgeführte Verfahren stellt sicher, dass die im Bereich einer Kraftfahrzeugantriebseinheit durch verschiedene Wärmequellen, wie etwa Ladeluftkühler oder Abgasrückführung, bereitgestellte Wärme für weitere Anwendungen zur Verfügung gestellt wird, ohne dass diese Wärme ausschließlich an die Umgebung abgeführt wird.

Mit dem Verfahren wird auf bevorzugte Weise in wenigstens einem ersten Kühlkreislauf ein erstes Arbeitsmittel und in einem zweiten Kühlkreislauf ein zweites Arbeitsmittel umgewälzt und die aus der Ladeluft und/oder dem Abgas, vorzugsweise über den Wärmetauscher der Abgasrückführung, abgeführte Wärme an das im ersten Kreislauf geförderte Arbeitsmittel oder Wärme, die im ersten Arbeitsmittel gespeichert ist, wenigstens teilweise an das im zweiten Kühlkreislauf geförderte zweite Arbeitsmittel übertragen. Die beiden Kühlkreisläufe werden getrennt voneinander betrieben, das bedeutet, dass in beiden Kühlkreisläufen jeweils wenigstens eine Fördereinheit vorgesehen ist. Auf diese Weise ist es möglich, mit Hilfe einer entsprechenden Regelung sicherzustellen, dass der erste und der zweite Kühlkreislauf bedarfsangepasst, also insbesondere in Abhängigkeit der abzuführenden Wärmemengen, betreibbar sind. Hierbei es insbesondere denkbar, die Förderung des im zweiten Kühlkreislauf befindlichen Arbeitsmittels in Abhängigkeit des Betriebspunktes der Antriebseinheit (bspw. Kaltstartphase oder Volllastfahrt) zu betreiben.

Zur Verwirklichung des Verfahrens wird im zweiten Kühlkreislauf ein Arbeitsmittel verwendet, das wenigstens teilweise aufgrund der Übertragung von Wärme direkt aus der Ladeluft- und/oder der Abgaskühlung in den zweiten Kühlkreislauf und/oder indirekt durch Wärmeübertragung aus dem ersten in den zweiten Kühlkreislauf in eine dampf- oder gasförmige Phase überführbar ist. Sobald im zweiten Kühlkreislauf Dampf erzeugt worden ist, wird aufgrund einer Drehzahlregelung der Fördereinheit sichergestellt, dass die benötigte Dampfmenge im zweiten Kühlkreislauf gefördert wird. Genauso ist es denkbar, über die regelbare Arbeitsmittelfördereinheit im zweiten Kühlkreislauf ein bestimmtes Druckniveaus einzustellen. In einer speziellen Ausführungsform der Erfindung ist die drehzahlgeregelte Fördereinheit mit der Expansionseinheit kombiniert.
Im zweiten Kühlkreislauf wechseln sich somit in Abhängigkeit des Wärme- bzw. Energiebedarfs Verdampfung, Entspannung, Verflüssigung und erneute Verdampfung des Arbeitsmittels ab. Durch die Entspannung des Dampfes in der Expansionseinheit, bei der es sich um eine Turbine oder eine entsprechend ausgeführte Expandereinheit handeln kann, wird die im Dampf enthaltene Wärmeenergie in Bewegungs-, vorzugsweise Rotationsenergie, umgewandelt. Diese Bewegungsenergie kann bspw. quasi als Antriebsunterstützung zur Erhöhung des Gesamtsystemwirkungsgrads an die Brennkraftmaschine übertragen werden. Durch das Vorsehen eines Generators ist es weiterhin bevorzugt möglich, die Rotationsenergie in elektrische Energie zu wandeln, die dem Kraftfahrzeug bzw. elektrischen Verbrauchern des Kraftfahrzeugs zur Verfügung gestellt wird. Genauso ist es denkbar, die durch die Expansionseinheit bereitgestellte Rotationsenergie quasi als Antriebsenergie für andere Systeme zu nutzen.

Im Folgenden wird die Erfindung ohne Beschränkung des allgemeinen Erfindungsgedankens anhand von Ausführungsbeispielen unter Bezugnahme auf die Figuren näher erläutert. Es zeigen:
- Fig. 1:: Kühlanlage mit Hochtemperatur- und Niedertemperaturkühlkreislauf;
- Fig. 2:: nicht-erfindungsgemäßes Kühlkonzept mit Dampferzeugung und separiertem Motorkühlkreislauf;
- Fig. 3:: Kühlkonzept mit Dampferzeugung, separiertem Motorkühlkreislauf und mehrstufiger Arbeitsmittelkondensation;
- Fig. 4:: nicht-erfindungsgemäßes Kühlkonzept mit Dampferzeugung, Wärmenutzung in einem Abgasnachbehandlungssystem und parallel geschalteten Ladeluftkühlern;
- Fig. 5:: Kühlkonzept mit Dampferzeugung, Wärmenutzung in einem Abgasnachbehandlungssystem und in Reihe geschalteten Ladeluftkühlern;
- Fig. 6:: Kühlkonzept mit Dampferzeugung, Wärmenutzung in einem Abgasnachbehandlungssystem, zwei Kondensatoren und parallel geschalteten Ladeluftkühlern; und
- Fig. 7:: Kühlkonzept mit Dampferzeugung, Wärmenutzung in einem Abgasnachbehandlungssystem, zwei Kondensatoren und in Reihe geschalteten Ladeluftkühlern.

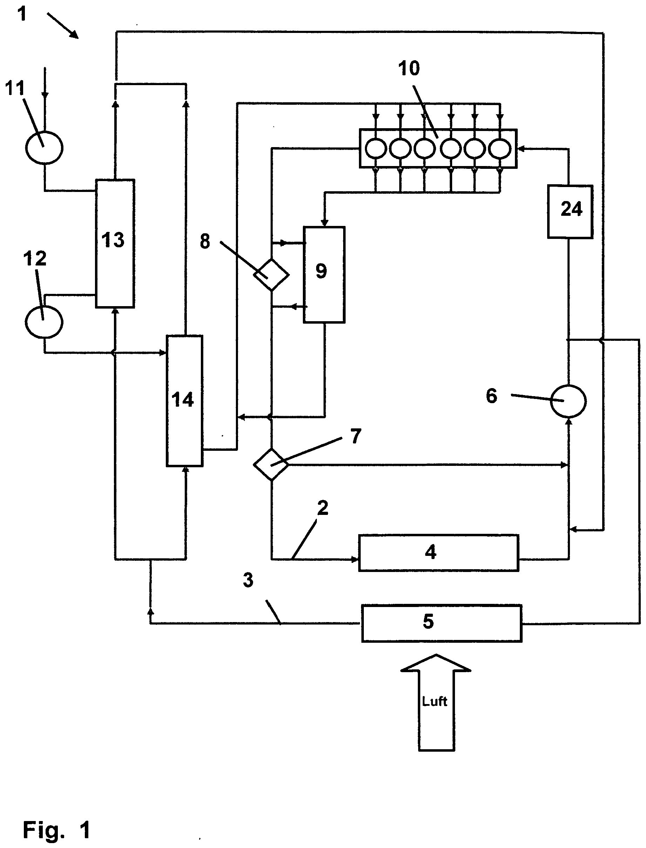

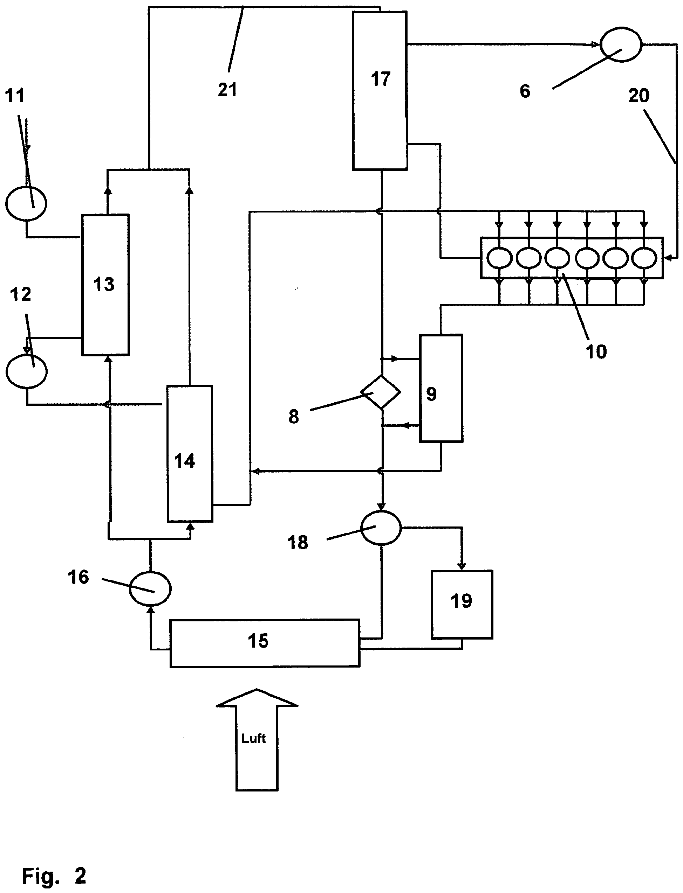

In Figur 1 ist ein Kühlsystem für eine Antriebseinheit eines Kraftfahrzeugs dargestellt, das die Grundlage für die in Verbindung mit den Figuren 2 bis 7 beschriebenen Kühlanlagen, in denen zumindest teilweise ein dampfförmiges Arbeitsmittel gefördert wird, darstellt. Um eine bessere Anschaulichkeit zu gewährleisten, werden zunächst anhand dieses Systems die wichtigsten Komponenten näher erläutert. Der in Figur 1 dargestellte Kühlkreislauf 1 ist im Wesentlichen in zwei hydraulisch verbundene Hauptströmungswege unterteilt ist. Die Strömungswege unterscheiden sich im Wesentlichen durch das Temperaturniveau, auf dem sie betrieben werden. So handelt es sich um einen Hochtemperatur- 2 und der Niedertemperaturströmungsweg 3, in denen ein Arbeitsmittel mit jeweils unterschiedlicher Temperatur umgewälzt wird. Sowohl auf dem Hochtemperatur- 2 als auch auf dem Niedertemperaturströmungsweg 3 sind jeweils Luft-Flüssigkeits-Wärmeübertrager 4, 5 vorgesehen, die mit Hilfe von Umgebungsluft gekühlt werden. Über die beiden Strömungswege, also den Hochtemperatur- 2 und den Niedertemperaturströmungsweg 3, wird über die Kühlmittelförderpumpe 6 ein Arbeitsmittel gefördert, das zwei Komponenten aufweist. Bei dem Arbeitsmittel handelt es sich um ein Gemisch aus Wasser und einem Glykol, wobei das Glykol die Verdampfungstemperatur des Gemisches gegenüber reinem Wasser anhebt, Korrosionserscheinungen innerhalb des Kühlkreislaufes 1 verhindert und darüber hinaus bei niedrigen Außentemperaturen und Standzeiten des Fahrzeugs das Einfrieren des Kühlkreislaufes verhindert.

Die Kühlmittelförderpumpe 6 fördert, sobald sie eingeschaltet wird, in Abhängigkeit der Motordrehzahl eine konstante Menge des Kühl- bzw. Arbeitsmittels durch den Kühlmittelkreislauf 1. Innerhalb des Kühlkreislaufes sind Regelventile 7, 8 vorgesehen, mittels derer die Durchflussmenge des Arbeitsmittels über die verschiedenen Strömungswege des Kühlmittelkreises 1 regelbar ist. Auf diese Weise kann die Durchflussmenge des Arbeitsmittels, das den Hochtemperaturkühler 4, den Niedertemperaturkühler 5 sowie den Abgaskühler 9, bei dem es sich hier um einen Kühler der Abgasrückführung handelt , durchströmt, reguliert werden.

Bei der in Fig. 1 dargestellten Antriebseinheit wird aus der Umgebung die für die Verbrennung in der Brennkraftmaschine 10 benötigte Ladeluft angesaugt und mittels eines Niederdruckverdichters 11 und eines Hochdruckverdichters 12 von Umgebungsdruck, also etwa 10⁵ Pa (=1 bar), auf etwa 3.10⁵ Pascal (ca. 3 bar) angehoben. Die Verdichtung der Ladeluft wird hierbei in zwei Stufen ausgeführt, um durch Abkühlung der Ladeluft in einem zwischen dem Niederdruck- 11 und dem Hochdruckverdichter 12 angeordneten Ladeluftzwischenkühler 13 den Wirkungsgrad der Ladeluftverdichtung zu maximieren. Die den Hochdruckverdichter 12 verlassende Ladeluft verfügt bei einem Druck von etwa 3-10⁵ Pa über eine Temperatur von etwa 170°C (ca. 443 K). Mit Hilfe des Ladelufthauptkühlers 14 wird die Ladeluft auf eine Temperatur von etwa 45°C (ca. 318 K) abgekühlt. Als Ladeluftzwischenkühler 13 sowie als Ladelufthauptkühler 14 sind jeweils Flüssigkeits-Luft-Wärmeübertrager vorgesehen, in denen die aus der verdichteten Ladeluft abgeführte Wärme an das im Niedertemperaturkreislauf 3 befindliche Arbeitsmittel übertragen wird. Nachdem die Ladeluft den Ladelufthauptkühler 14 verlassen hat, wird ihr ein Teil des Abgases, das die Bremskraftmaschine 10 bereits verlassen hat, beigemischt und dieses Abgas-Ladeluftgemisch dem Verbrennungsraum der Brennkraftmaschine 10 zugeführt. Der Anteil des der Ladeluft zugemischten Abgases kann 20 bis zu 40 % des die Brennkraftmaschine verlassenden Abgases betragen.

Der Brennkraftmaschine 10 ist weiterhin in einer Abgasrückführung ein Abgaskühler 9 nachgeschaltet, mit dem der Teil des Abgases, der der Ladeluft zugemischt wird, abgekühlt wird. Die im Abgaskühler 9 anfallende Wärme wird über eine entsprechende Wärmeübertrageeinheit an das im Hochtemperaturkreislauf 2 geförderte Arbeitsmittel übertragen. Hierbei ist der Abgaskühler 9 derart angeordnet, dass das den Abgaskühler 9 bzw. die Wärmeübertrageeinheit im Abgaskühler 9 verlassende Arbeitsmittel zum luftgekühlten Hochtemperaturkühler 4 strömt. Über das Regelventil 8 wird die den Abgaskühler 9 bzw. dessen Wärmeübertrageeinheit durchströmende Durchflussmenge des Arbeitsmittels und über das Regelventil 7 die Durchflussmenge des den Hochtemperaturkühler 4 durchströmenden Arbeitsmittels eingestellt. Über das Regelventil 7 ist darüber hinaus die Durchflussmenge des Arbeitsmittels regelbar, die den Niedertemperaturkühler 5 sowie den parallelverschalteten Ladeluftzwischen-13 und Ladelufthauptkühler 14 durchströmt. Je nach Auslegung der Gesamtanlage ist es ebenfalls denkbar, den Ladeluftzwischen- 13 und Ladelufthauptkühler 14 in Reihe zu schalten. Derartige Ausführungsformen werden in Zusammenhang mit den Kühlkonzepten, die zumindest einen Kühlkreislauf vorsehen, in dem ein Arbeitsmittel wenigstens teilweise einen Phasenübergang vollzieht, näher erläutert.

Neben den zuvor beschriebenen Kühlern bzw. Wärmeübertrageeinheiten kann darüber hinaus je nach Auslegung entweder im Hochtemperaturkreislauf 2 oder im Niedertemperaturkreislauf 3 ein Ölkühler 24 vorgesehen sein, über den die aus dem für die Brennkraftmaschine benötigten Schmieröle abzuführende Wärme in den Hochtemperaturkreislauf 2 bzw. in den Niedertemperaturkreislauf 3 übertragen wird. Alternativ oder in Ergänzung zu dem vorbeschriebenem Schmierölkühler kann es sich bei einem derartigen Kühler auch um einen Ölkühler des für andere Aggregate eines Kraftfahrzeugs, wie beispielsweise einen Retarder, kraftstoffkühlerbenötigtes, zu kühlendes Öl handeln.

Das in der Figur 1 beschriebene Kühlsystem ist derart zu betreiben, dass das im Niedertemperaturkreislauf geförderte Arbeitsmittel eine Temperatur aufweist, die 10-15 K unterhalb der Verdampfungstemperatur dieses Arbeitsmittels liegt. Weiterhin erfolgt eine Regelung des Arbeitsmittelmassenstroms hinsichtlich der vom Gesamtkühlsystem bereitzustellenden Kühlleistung und/oder hinsichtlich einer für den Verbrennungsprozess innerhalb der Brennkraftmaschine optimalen Ladelufttemperatur. Um eine derartige, optimale Regelung des Gesamtkühlsystems zu ermöglichen, werden entsprechende Kenngrößen sowie Kennfelder in der Motorsteuerung hinterlegt. Auf diese Weise wird eine Kühlung der Ladeluft- sowie der Abgaskühler unter Berücksichtigung eines optimalen Arbeitspunktes und/oder optimaler Abgaswerte der Brennkraftmaschine ermöglicht.

In Fig. 2 ist ein nicht-erfindungsgemäßes Kühlsystem dargestellt, in dem ein Kühlkreislauf vorgesehen ist, in dem das Arbeitsmittel während des Betriebs zumindest teilweise einen Phasenübergang vollzieht. Somit unterscheidet sich das Kühlsystem gemäß Fig. 2 von dem der Fig. 1 im Wesentlichen dadurch, dass die beiden auf unterschiedlichen Temperaturniveaus betriebenen Strömungswege mit jeweils parallel geschalteten Niedertemperatur- 5 bzw. Hochtemperaturkühlern 4 durch jeweils hydraulisch entkoppelte Kühlkreisläufe ersetzt worden sind. Bei dem ersten Kühlkreislauf 20 handelt es sich um den Kühlkreislauf der Brennkraftmaschine (Motorkühlkreislauf). In diesem ersten Kühlkreislauf 20 wird ein Wasser-Glykol-Gemisch als Arbeitsmittel verwendet, das die aus der Brennkraftmaschine abzuführende Wärme zumindest teilweise an den zweiten Kühlkreislauf 21 über den Vorerwärmer 17 überträgt. In dem zweiten Kühlkreislauf 21 wird ein spezielles Arbeitsmittel gefördert, das zumindest teilweise eine geringere Verdampfungstemperatur als Wasser bzw. das im ersten Kühlkreislauf 20 geförderte Wasser-Glykol-Gemisch aufweist.

Die Bereitstellung einer verdichteten und gekühlten Ladeluft, dem Teile des aus der Brennkraftmaschine abgeleiteten Abgases beigemischt werden, erfolgt analog zu dem im Zusammenhang mit Figur 1 beschriebenen Kühlsystem. So sind auch in Fig. 2 ein Niederdruck-11 sowie ein Hochdruckverdichter 12, ein Ladeluftzwischen- 13 und ein Ladelufthauptkühler 14 sowie ein Abgaskühler 9, mit dem das in der Abgasrückführung befindliche Abgas abgekühlt wird, vorgesehen. Auch in diesem Fall wird über den Abgaskühler 9 nur ein Teil des die Brennkraftmaschine 1 verlassenden Abgases der Ladaluftzufuhr zugeführt.

Abweichend zu dem in Figur 1 dargestellten System wird der Druck des verwendeten Arbeitsmittels nach Verlassen des luftgekühlten Kühlers 15 mit Hilfe einer Pumpe 16 von einem Druck von ca. 1,5-10⁵ Pa auf einen Druck von etwa 11 bis 16-10⁵ Pa angehoben. Bei der in diesem Ausführungsbeipiel verwendeten Pumpe 16, handelt es sich um eine regelbare Fördereinheit, mit der in Abhängigkeit des Betriebszustands der Antriebseinheit eine geeignete Dampfmenge und/oder ein bestimmter Druck im zweiten Kühlkreislauf 21 einstellbar ist.

Das durch die Pumpe 16 zunächst druckbeaufschlagte Arbeitsmittel wird anschließend durch die parallel angeordneten Ladeluftkühler 13, 14, die bei einer alternativen Verschaltung auch in Reihe angeordnet sein können, gefördert und gelangt mit einer Temperatur von etwa 70 bis 90°C (etwa 353 K) zu einem Vorerwärmer 17, in dem die Temperatur des Arbeitsmittels auf eine Temperatur von etwa wenigstens 105°C (etwa 378 K) angehoben wird und gleichzeitig je nach Betriebszustand bereits partiell verdampft. Die für die Vorerwärmung des Arbeitsmittels im Vorerwärmer 17 benötigte Wärme wird vom ersten Kühlkreislauf 20, der Wärme aus der Brennkraftmaschine abführt, bereitgestellt.

Nach Verlassen des Vorerwärmers 17 gelangt das Arbeitsmittel in den Abgaskühler 9, wobei die Durchflussmenge über das Regelventil 8 einstellbar ist. Das den Abgaskühler 9 durchströmende Arbeitsmittel wird zumindest teilweise verdampft oder sogar überhitzt. Zur Erwärmung des Arbeitsmittels auf eine Temperatur, die einen zumindest teilweisen Phasenübergang ermöglicht, wird auf der Gegenseite des Abgaskühler-Wärmeübertragers das aus der Brennkraftmaschine 10 abgeleitete Abgas von etwa 650°C (etwa 920 K) auf eine Temperatur von etwa bis zu 100°C (etwa 373 K) abgekühlt.

Nachdem das Arbeitsmittel in dem Abgaskühler 9 zumindest teilweise verdampft worden ist, wird es in einen Separator 18 gefördert, in dem die flüssige und die dampfförmige Phase des Arbeitsmittels voneinander getrennt werden. Hierbei ist es unerheblich, ob es sich bei dem verwendeten Arbeitsmittel um ein Einstoffarbeitsmittel oder um ein Gemisch aus mehreren Komponenten handelt.

Während der flüssige Teil des Arbeitsmittels aus dem Separator 18 direkt in den luftgekühlten Wärmeübertrager, der die Funktion eines Kondensators 15 übernimmt, geleitet wird, wird die dampfförmige Phase des Arbeitsmittels in einen Expander 19 eingeleitet. In dem Expander 19 wird das Arbeitsmittel entspannt, wobei die im Arbeitsmittel vor Eintritt in den Expander 19 gespeicherte Energie zumindest teilweise in Bewegungsenergie umgewandelt wird. Je nach konstruktiver Ausführung des Expanders 19, findet bereits innerhalb des Expanders eine zumindest teilweise Verflüssigung des Arbeitsmittels aufgrund der Entspannung statt. Im Anschluss an die Entspannung wird das Arbeitsmittel aus dem Expander 19 in den luftgekühlten Wärmeübertrager 15 geleitet, wo eine Vermischung der aus dem Expander 19 und aus dem Separator 18 kommenden Fluidströme des Arbeitsmittels stattfindet. Der luftgekühlte Wärmeübertrager 15 übernimmt hierbei die Funktion eines Kondensators, in dem unter Wärmeabgabe eine vollständige Verflüssigung des Arbeitsmittels erfolgt.

In diesem Zusammenhang ist es auch denkbar, dem Wärmeübertrager 15 (Fahrzeugkühler) eine Mischkammer vorzuschalten oder die Mischkammer sogar mit einem Wärmeübertrager zu koppeln, so dass ggf. durch die Absorption eines Stoffes anfallende Wärme aus dem zweiten Kühlkreislauf 21 ausgekoppelt werden kann. Die von dem Expander 19 bereitgestellte Bewegungsenergie kann entweder an die Brennkraftmaschine oder andere Aggregate übertragen werden. Hierbei ist es auch denkbar, die vom Expander 19 bereitgestellte Energie über einen Generator in elektrische Energie zu wandeln.

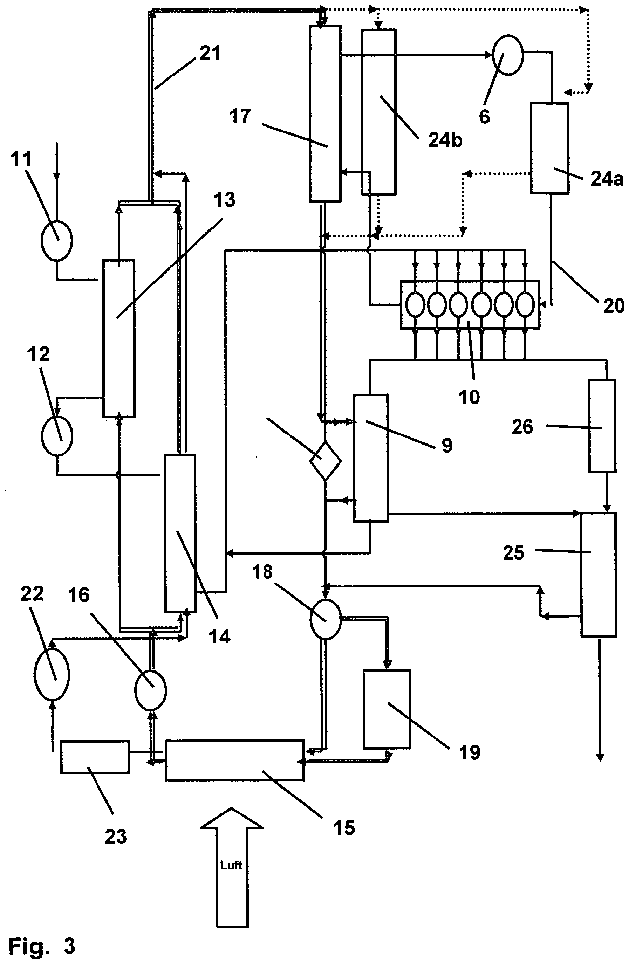

In der Figur 3 ist ein weiteres Kühlsystem dargestellt, das sich hinsichtlich der Nutzung der Wärme, die durch verschiedene im Bereich der Kraftfahrzeugantriebseinheit vorhandene Wärmequellen bereitgestellt wird, von den in den Figuren 1 und 2 beschriebenen Systemen unterscheidet. Die Verschaltung der aus den Verdichtereinheiten 11, 12 und den Ladeluftkühlern 13, 14 bestehenden Luftzufuhr der Brennkraftmaschine 10 sowie der Kühlung der Abgasrückführung entspricht der in den Figuren 1 und 2 beschriebenen Verschaltung.

Darüber hinaus sind im ersten Kühlkreislauf 20, also dem so genannten Motorkühlkreislauf neben der Kühlmittelpumpe ein Getriebeölkühler 24b und ein Motorölkühler 24a vorgesehen, deren abzuführende Wärme an das im ersten Kühlkreislauf 20 geförderte Wasser-Glykol-Gemisch übertragen wird. Die im ersten Kühlkreislauf bereitgestellte Wärme wird über den Vorerwärmer 17 an den zweiten Kühlkreislauf 21, in dem analog zur Ausführung gemäß Fig. 2 ein luftgekühlter Wärmeübertrager 15, der wiederum die Funktion eines Kondensators übernimmt, angeordnet ist, übertragen.

Im Gegensatz zu dem im ersten Kühlkreislauf 20 befindlichen Arbeitsmittel wird das im zweiten Kühlkreislauf 21 befindliche Arbeitsmittel während des Kühlbetriebs derart erhitzt, dass es einen wenigstens teilweisen Phasenübergang vollzieht. Wie später noch näher erläutert wird, kann es sich bei dem gemäß Fig. 2 und Fig. 3 im zweiten Kühlkreislauf verwendeten Arbeitsmittel um ein Einstoffarbeitsmittel mit niedriger Verdampfungstemperatur oder um ein aus mehreren Komponenten bestehendes Gemisch handeln, wobei wenigstens eine Komponente des Gemischs eine gegenüber Wasser vergleichsweise niedrige Verdampfungstemperatur aufweist.

Ziel der in der Fig. 3 dargestellten Verschaltung ist es, durch eine optimale Ausnutzung der von den verschiedenen Wärmequellen bereitgestellten Wärme, eine möglichst große Dampfmenge im zweiten Kühlkreislauf 21 zur Verfügung zu stellen. Die in der bereitgestellten Dampfmenge enthaltene Energie soll mittels einer Expandereinheit in Bewegungsenergie umgewandelt werden. Im zweiten Kühlkreislauf 21 sind zwei Arbeitsmittelfördereinheiten 16, 22 vorgesehen, deren Drehzahl und damit die Förderrate des Arbeitsmittels und/oder der im zweiten Kühlkreislauf 21 herrschende Druck variabel regelbar ist/sind. Die erste Fördereinheit 16 ist wie in Figur 2 angeordnet, während die zusätzliche Fördereinheit 22 in einem bereich des zweiten Kühlkreislaufs angeordnet ist, in dem eine vergleichsweise geringe Temperatur herrscht. Die Regelung der Fördereinheiten 16, 22 erfolgt hierbei in Abhängigkeit von Kennfeldern, die in der Motorsteuereinheit hinterlegt sind, um in Abhängigkeit des jeweiligen Betriebszustandes der Antriebseinheit des Kraftfahrzeugs eine optimierte Kühlung sowie Erzeugung von Dampf und damit Bereitstellung von Bewegungsenergie zu realisieren.

Die Beschreibung erfolgt ausgehend von dem luftgekühlten Wärmeübertrager 15 (Fahrzeugkühler), in dem das Arbeitsmittel, das bereist den Separator 18 oder den Expander 19 verlassen hat, vollständig wieder verflüssigt wird. Hierbei erfolgt eine Abkühlung des Arbeitsmittels, die in ein oder zwei Stufen realisiert wird.

Grundsätzlich besteht die Möglichkeit, nur einen einzigen luftgekühlten Wärmeübertrager 15, der die Funktion eines Kondensators übernimmt, vorzusehen und in dem das verflüssigte Arbeitsmittel von einer Temperatur von etwa 105°C auf eine Temperatur von etwa 40 °C abgekühlt wird. In diesem Fall müssen verhältnismäßig große Wärmeübertrager verwendet werden. Von einem derartigen luftgekühlten Wärmeübertrager 15 wird das Arbeitsmittel über die drehzahlgeregelte Förderpumpe 16 direkt zu den Ladeluftkühlern gefördert.

Eine weitere Verschaltung sieht an dieser Stelle einen zweiten Niedertemperatur-Kondensator 23 vor. Bei dieser technischen Lösung wird das Arbeitsmittel im Hochtemperatur-Kondensator 15 zunächst auf eine Temperatur von etwa 80°C abgekühlt. Ein erster Teilstrom des so temperierten Arbeitsmittels wird über die Pumpe 16 direkt in den Ladeluftzwischenkühler 13 gefördert. Ein zweiter Teilstrom gelangt dagegen in den Niedertemperatur-Kondensator 23 und wird hier auf eine Temperatur von etwa 40°C abgekühlt. Das auf 40°C abgekühlte Arbeitsmittel gelangt über eine zusätzliche Pumpe 22 zum Ladelufthauptkühler 14. Bezüglich der Verschaltung der Ladeluftkühler 13, 14 wird lediglich darauf hingewiesen, dass der Ladelufthaupt- 14 und der Ladeluftzwischenkühler 13 sowohl parallel als auch in Reihe geschaltet werden können.

Von den beiden Ladeluftkühlern 13, 14 wird das Arbeitsmittel zu einem Vorerwärmer 17 gefördert und schließlich im Abgaskühler 9 verdampft oder zumindest teilweise sogar überhitzt. Vom Abgaskühler 9 gelangt das Arbeitsmittel des zweiten Kühlkreislaufes 21 in einen Separator 18, in dem die flüssige von der dampfförmigen Phase des Arbeitsmittels getrennt wird. Wie bei der in Fig. 2 beschriebenen Ausführungsform, wird der dampfförmige Anteil des Arbeitsmittels zu einer Expandereinheit 19 gefördert, in der das Arbeitsmittel entspannt wird. Anschließend gelangt das durch den Expander 19 entspannte Arbeitsmittel erneut in den luftgekühlten Wärmeübertrager 15 oder gemäß der beschriebenen alternativen Verschaltung ggf. auch in den Niedertemperatur-Kondensator 23.

Neben den vorbeschriebenen Komponenten ist in den zweiten Kühlkreislauf 21 auch ein Abgas-Wärmetauscher 25 integriert. Der Abgas-Wärmetauscher 25 ist in Strömungsrichtung des Arbeitsmittels im zweiten Kühlkreislauf 21 dem Abgaskühler 9 nachgeschaltet und entzieht vor allem dem Abgasteilstrom, der direkt die Brennkraftmaschine 1 verlassen und lediglich noch ein Abgasnachbehandlungssystem 26 durchströmt hat, einen Teil der in diesem Abgasteilstrom enthaltenen Wärme und überträgt diese Wärme in den zweiten Kühlkreislauf 21. Das Abgasnachbehandlungssystem 26 kann auch in Abgasströmungsrichtung vor dem Abgas-Wärmetauscher 25 angeordnet sein. In jedem Fall befindet sich der Abgas-Wärmetauscher 25 innerhalb des zweiten Kühlkreislaufs 21 bei dem in Figur 3 dargestellten Ausführungsbeispiel allerdings zwischen dem Abgaskühler 9 und dem Separator 18.

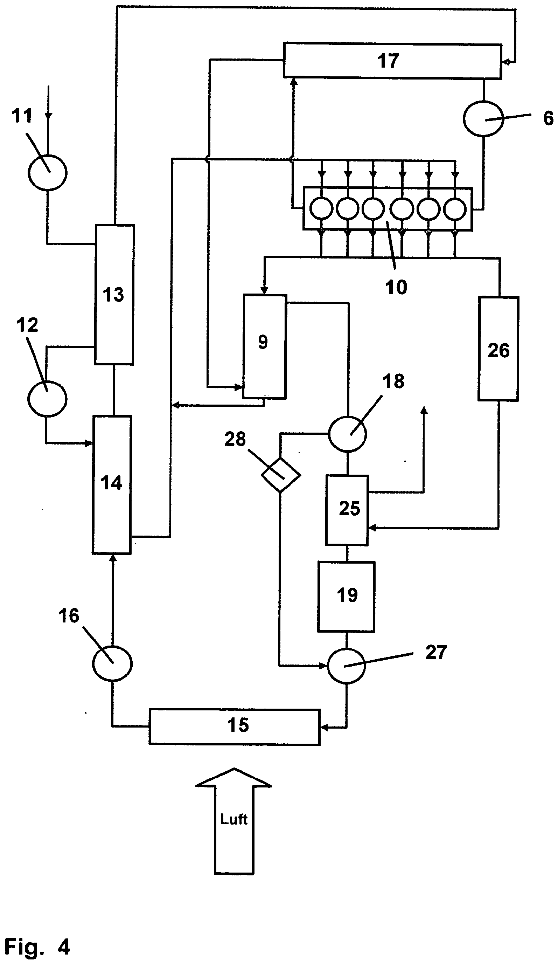

Das in Fig. 4 dargestellte nicht-erfindungsgemäße Kühlsystem unterscheidet sich durch zwei Merkmale von dem in Figur 3 dargestellten System. Einerseits sind der Ladeluftzwischenkühler 13 und der Ladelufthauptkühler 14 in Reihe angeordnet, andererseits befindet sich der Abgas-Wärmetauscher 26 bei dieser Verschaltung zwischen dem Separator 18 und dem Expander 19. Darüber hinaus ist zwischen dem Expander 19 und dem als Kondensator wirkenden luftgekühlten Wärmeübertrager 15 ein Mischer 27 vorgesehen, in dem die den Separator 18 verlassende flüssige Phase des Arbeitsmittels und das den Expander 19 verlassende Arbeitsmittel gemischt werden. Bei Verwendung eines Mehrkomponenten-Arbeitsmittels kann es im Mischer 27 auch zu Absorptionsvorgängen kommen. Innerhalb des zweiten Kühlkreislaufes 21 zwischen dem Separator 18 und dem Mischer 27 ist ferner ein Drosselventil 28 vorgesehen, über das eine Entspannung des Arbeitsmittels, das nicht den Expander 19 durchströmt, erreicht wird.

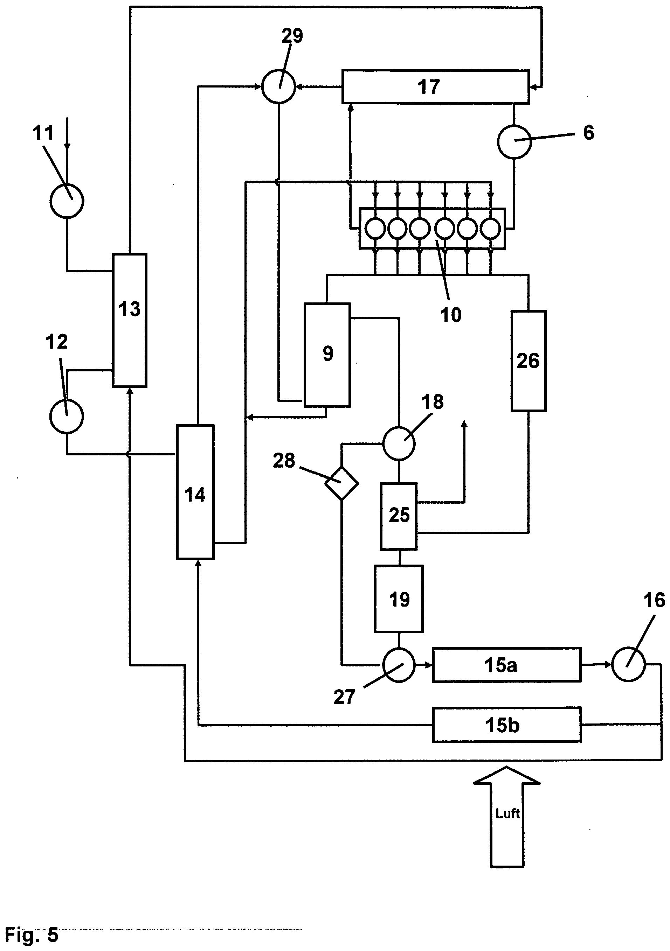

In Figur 5 ist ein Kühlkonzept zu sehen, bei dem der luftgekühlte Wärmeübertrager 15 aus einem Hochtemperaturkondensator 15a und einem Niedertemperaturkondensator 15b gebildet wird. Dem Hochtemperaturkondensator 15a ist die Fördereinheit 16 nachgeschaltet, über die das verflüssigte Arbeitsmittel wahlweise dem Niedertemperaturkondensator 15b und dem Ladelufthauptkühler 14 oder direkt dem Ladeluftzwischenkühler 13 zugeführt wird. Alternativ kann die Abzweigung zum Niedertemperaturkondensator 15b vor der Fördereinheit 16 angeordnet sein, um im Niedertemperaturkondensator 15b einen geringen Druck zu gewährleisten. Darüber hinaus ist ein weiterer Mischer 29 vorgesehen, in dem das den Ladelufthauptkühler 14 und das den Vorwärmer 17 verlassende Arbeitsmittel gemischt wird. Dem Vorerwärmer 17 wird in diesem Fall Arbeitsmittel zugeleitet, das den Ladeluftzwischenkühler 13 durchströmt hat.

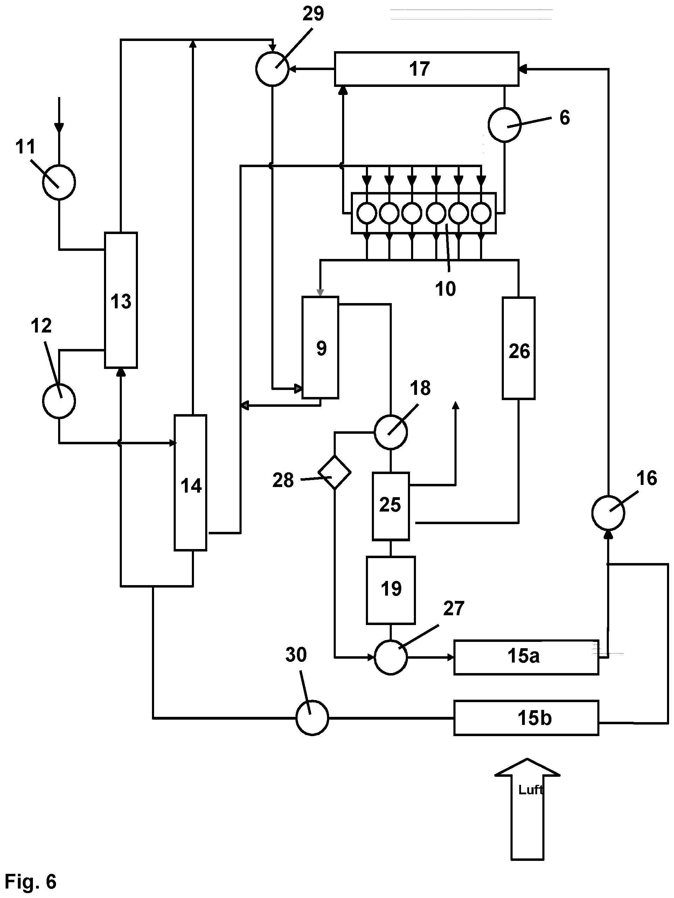

Ein gegenüber dem in Fig. 5 leicht abgeändertes Kühlsystem ist der Figur 6 zu entnehmen. Wesentlich hierbei ist zunächst, dass vor der Fördereinheit 16 eine Abzweigung zum Niedertemperaturkondensator 15b vorgesehen ist, so dass im Niedertemperaturkondensator 15b ein vergleichsweise geringer Druck zu gewährleisten ist. Darüber hinaus ist dem Niedertemperaturkondensator 15b eine weitere Fördereinheit 30 zur Druckerhöhung nachgeschaltet. Auch diese Fördereinheit 30 ist variabel regelbar. Weiterhin wird der Teil des Arbeitsmittels, der den Hochtemperaturkondensator 15a verlässt und nicht in den Niedertemperaturkondensator 15b geleitet wird, über eine Fördereinheit 16 direkt dem Vorerwärmer 17 zugeleitet, ohne einen Ladeluftkühler zu durchströmen.

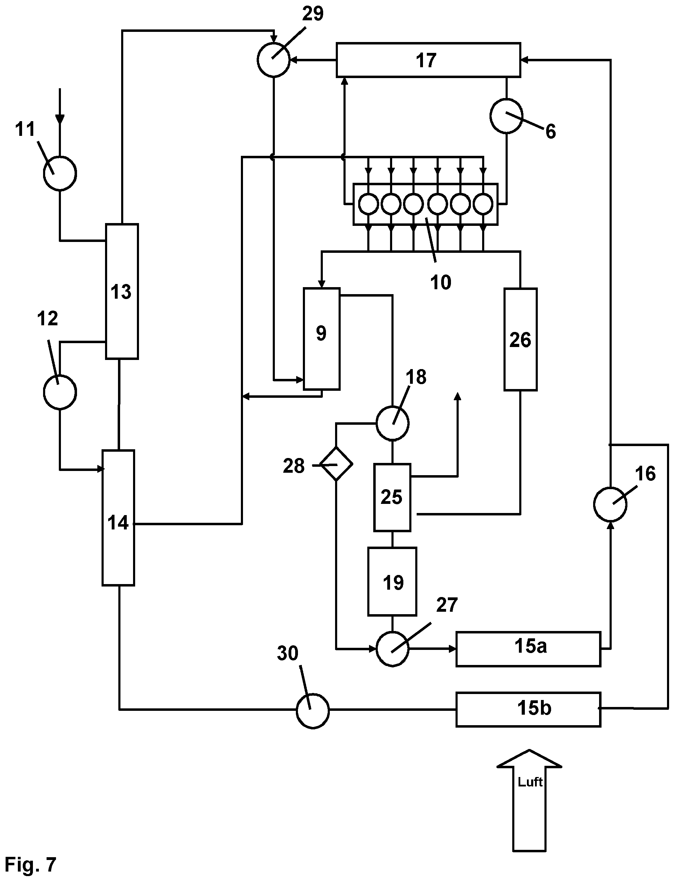

Abschließend ist in Figur 7 ein Kühlsystem dargestellt, das gegenüber dem in Figur 6 derart abgewandelt ist, dass dem Niedertemperaturkondensator 15b Arbeitsmittel durch die Fördereinheit 16 zugeführt wird und andererseits die Ladeluftkühler 13, 14 in Strömungsrichtung des Arbeitsmittels hinter dem Niedertemperaturkondensator 15b in Reihe angeordnet sind. Grundsätzlich ist auch hier eine Parallelschaltung der Ladeluftkühler möglich. Ein Teilstrom des Arbeitsmittels wird auch hier direkt aus dem Hochtemperaturkondensator 15a über die Fördereinheit 16 in den Vorerwärmer 17 gefördert. Hinter dem Vorerwärmer 17 ist abermals ein Mischer 29 vorgesehen, in dem das den Vorerwärmer 17 verlassende Arbeitsmittel mit dem Arbeitsmittel aus den Ladeluftkühlern 13, 14 vermischt wird.

Die im Zusammenhang mit den Figuren 1 bis 7 beschriebenen Kühlsysteme sind besonders für den Einsatz in Nutzfahrzeugen geeignet. Gerade in diesen Fahrzeugen ist der Bedarf an technischen Lösungen, die Alternativen zu den herkömmlichen Kühlkonzepten bieten, groß.

Als Arbeitsmittel, die eine gegenüber Wasser vergleichsweise niedrige Verdampfungstemperatur aufweisen, kommen sowohl Gemische als auch Einstoffarbeitsmittel in Frage. Bei den Gemischen handelt es sich in der Regel um wässrige Lösungen, wobei im Wasser ein Kältemittel mit niedrigem Siedepunkt, also niedriger Verdampfungstemperatur, gelöst ist. Wird ein derartiges Mehrkomponentenarbeitsmittel erwärmt, so verdampft die Komponente, die die niedrige Verdampfungstemperatur aufweist, während eine größtenteils Wasser enthaltende wässrige Lösung in flüssiger Phase verbleibt. Vorzugsweise werden als Mehrkomponenten-Arbeitsmittel Ammoniak-Wasser-Gemische verwendet, bei denen Ammoniak in unterschiedlicher Konzentration im Wasser gelöst ist. Als besonders geeignet erscheinen in diesem Zusammenhang Ammoniak-Wasser-Gemische, bei denen der Anteil des Ammoniaks am Gesamtgemisch 30, 40 oder 50 Prozent ausmacht.

Eine Alternative zur Verwendung der vorgenannten Mehrkomponenten-Arbeitsmittel stellen fluidische Stoffe dar, die über eine vergleichsweise niedrige Verdampfungstemperatur verfügen. Besonders geeignet sind in diesem Zusammenhang Stoffe, die neben einer niedrigen Verdampfungstemperatur auch über eine vergleichsweise hohe spezifische Wärmekapazität verfügen. Aus diesem Grund eignen sich vor allem Kohlenwasserstoffe, insbesondere Pentane, sowie die als Kältemittel in Klimaanlangen bekannten Flurkohlenwasserstoffe (bspw. R134a, 245fa, 245ca). Eine ausführliche Aufstellung der als Arbeitsmittel in Frage kommenden Stoffe ist der in der Beschreibung aufgeführten Tabelle zu entnehmen.

### Bezugszeichenliste

- 1: Kühlanlage
- 2: Hochtemperaturströmungsweg
- 3: Niedertemperaturströmungsweg
- 4: Hochtemperaturkühler
- 5: Niedertemperaturkühler
- 6: Kühlmittelpumpe
- 7: Regelventil
- 8: AGR-Regelventil
- 9: Abgaskühler
- 10: Brennkraftmaschine
- 11: Niederdruckverdichter
- 12: Hochdruckverdichter
- 13: Ladeluftzwischenkühler
- 14: Ladelufthauptkühler
- 15: als luftgekühlter Wärmeübertrager ausgeführter Kondensator
- 15a: Hochtemperaturkondensator
- 15b: Niedertemperaturkondensator
- 16: Fördereinheit
- 17: Vorerwärmer
- 18: Separator
- 19: Expander
- 20: erster Kühlkreislauf
- 21: zweiter Kühlkreislauf
- 22: zusätzliche Fördereinheit
- 23: Zusatz-Niedertemperatur-Kondensator
- 24: Ölkühler
- 24a: Motorölkühler
- 24b: Getriebeölkühler
- 25: Abgas-Wärmetauscher
- 26: Abgasnachbehandlungssystem
- 27: Mischer
- 28: Drosselventil
- 29: Mischer
- 30: Fördereinheit

## Patentansprüche

1. Antriebseinheit eines Kraftfahrzeugs, die über eine Brennkraftmaschine (10), über eine einen Niederdruckverdichter (11), einen Hochdruckverdichter (12) und eine Ladeluftkühleinheit (13, 14) aufweisende Ladeluftzufuhr und über eine Abgasabführung, mittels der in der Brennkraftmaschine (10) gebildetes Abgas abgeführt wird, verfügt und die eine Kühlanlage mit wenigstens einem Kühlkreislauf (1) aufweist,
wobei wenigstens ein erster Kühlkreislauf (20) sowie wenigstens ein zweiter Kühlkreislauf (21), in dem wenigstens ein in die Abgasabführung integrierter Abgaskühler (9) und die Ladeluftkühleinheit (13, 14) angeordnet sind, wobei die Ladeluftkühleinheit einen Ladeluftzwischenkühler (13) und einen Ladelufthauptkühler (14) aufweist, die thermisch derart an den wenigstens einen zweiten Kühlkreislauf (21) gekoppelt sind, dass in Strömungsrichtung der Ladeluft der Ladeluftzwischenkühler (13) zwischen dem Niederdruck- (11) und dem Hochdruckverdichter (12) angeordnet ist und der Ladelufthauptkühler (14) dem Hochdruckverdichter (12) nachgeschaltet ist, vorgesehen sind, die mittels zumindest eines Wärmeübertragers, über den der erste (20) und der zweite (21) Kühlkreislauf in thermischem Kontakt stehen, hydraulisch entkoppelt sind
und
wobei bei einem in dem zweiten Kühlkreislauf (21) enthaltenen Arbeitsmittel während einer Betriebsphase der Kühlanlage ein zumindest teilweiser Phasenübergang herbeiführbar ist,
**dadurch gekennzeichnet,**
**dass** im zweiten Kühlkreislauf (21) wenigstens ein Hochtemperaturkreislauf vorgesehen ist, der auf einem höheren Temperaturniveau als wenigstens ein Niedertemperaturkreislauf des zweiten Kühlkreislaufs (21) betreibbar ist, und
**dass** im Hochtemperaturkreislauf ein von dem Arbeitsmittel durchströmbarer und von Umgebungsluft kühlbarer Hochtemperaturwärmeübertrager (15a) und im Niedertemperaturkreislauf ein von dem Arbeitsmittel durchströmbarer und von Umgebungsluft kühlbarer Niedertemperaturwärmeübertrager (15b) vorgesehen sind.

2. Antriebseinheit nach Anspruch 1, **dadurch gekennzeichnet, dass** in dem wenigstens einen ersten Kühlkreislauf (20) ein erstes Arbeitsmittel und in dem zweiten Kühlkreislauf (21) ein zweites Arbeitsmittel enthalten ist, wobei das erste und das zweite Arbeitsmittel unterschiedliche physikalische und/oder chemische Eigenschaften aufweisen.

3. Antriebseinheit nach Anspruch 1 oder 2, **dadurch gekennzeichnet, dass** ein Ölkühler (24) vorgesehen ist, der thermisch an den wenigstens einen ersten Kühlkreislauf (20) gekoppelt ist.

4. Antriebseinheit nach einem der Ansprüche 1 bis 3, **dadurch gekennzeichnet, dass** der Abgaskühler (9) über eine Abgasrückführkühleinheit verfügt, die derart zwischen der Abgasabführung und der Ladeluftzufuhr angeordnet ist, dass mittels der Abgasrückführkühleinheit von einem aus der Abgasabführung abgeleiteten Abgasteilstrom vor Einleitung in die Ladeluftzufuhr Wärme an den zweiten Kühlkreislauf (21) übertragbar ist.

5. Antriebseinheit nach einem der Ansprüche 1 bis 4, **dadurch gekennzeichnet, dass** in dem zweiten Kühlkreislauf (21) eine Arbeitsmittelfördereinheit (16, 22, 30) vorgesehen ist, die in Abhängigkeit zumindest eines Betriebsparameters der Kühlanlage regelbar ist.

6. Antriebseinheit nach einem der Ansprüche 1 bis 5, **dadurch gekennzeichnet, dass** in der erste (20) und der zweite (21) Kühlkreislauf auf unterschiedlichen Temperaturniveaus betreibbar sind.

7. Antriebseinheit nach einem der Ansprüche 2 bis 6, **dadurch gekennzeichnet, dass** das im zweiten Kühlkreislauf (21) enthaltene zweite Arbeitsmittel oder zumindest eine Komponente des zweiten Arbeitsmittels eine niedrigere Verdampfungstemperatur als das im ersten Arbeitskreis (20) enthaltene Arbeitsmittel aufweist.

8. Antriebseinheit nach einem der Ansprüche 1 bis 7, **dadurch gekennzeichnet, dass** im zweiten Kühlkreislauf (21) eine Wärmekraftmaschine (19) vorgesehen ist, die während der Betriebsphase der Kühlanlage mit zumindest teilweise in eine Dampfphase überführtem Arbeitsmittel beaufschlagbar ist.

9. Antriebseinheit nach Anspruch 8, **dadurch gekennzeichnet, dass** die Wärmekraftmaschine (19) eine Turbinenanlage oder eine Expandereinheit ist.

10. Antriebseinheit nach Anspruch 8 oder 9, **dadurch gekennzeichnet, dass** die Wärmekraftmaschine mit der Brennkraftmaschine (10) in Wirkverbindung steht.

11. Antriebseinheit nach einem der Ansprüche 8 bis 10, **dadurch gekennzeichnet, dass** die Wärmekraftmaschine über eine Kurbelwelle oder über einen Riemenantrieb mit der Brennkraftmaschine (10) in Wirkverbindung steht.

12. Antriebseinheit nach einem der Ansprüche 1 bis 11, **dadurch gekennzeichnet, dass** das im zweiten Kühlkreislauf (21) enthaltene zweite Arbeitsmittel ein Ammoniak-Wasser-Gemisch aufweist.

13. Antriebseinheit nach einem der Ansprüche 1 bis 11, **dadurch gekennzeichnet, dass** das im zweiten Kühlkreislauf (21) enthaltene zweite Arbeitsmittel eine Kohlenwasserstoffverbindung aufweist.

14. Antriebseinheit nach einem der Ansprüche 1 bis 11, **dadurch gekennzeichnet, dass** das im zweiten Kühlkreislauf (21) enthaltene zweite Arbeitsmittel n-Perfluoro-Pentan (C₅F₁₂) aufweist.

## Claims

1. A drive unit of a motor vehicle, which drive unit has an internal combustion engine (10), has a charge-air supply arrangement having a low-pressure compressor (11), a high-pressure compressor (12) and a charge-air cooling unit (13, 14), and has an exhaust-gas discharge arrangement by means of which exhaust gas that is formed in the internal combustion engine (10) is discharged, and which drive unit has a cooling system with at least one cooling circuit (1),
wherein at least one first cooling circuit (20) and at least one second cooling circuit (21), in which at least one exhaust-gas cooler (9), integrated into the exhaust-gas discharge arrangement, and the charge-air cooling unit (13, 14) are arranged, wherein the charge-air cooling unit has a charge-air intercooler (13) and a charge-air main cooler (14) which are thermally coupled to the at least one second cooling circuit (21) such that, in a flow direction of the charge air, the charge-air intercooler (13) is arranged between the low-pressure (11) and the high-pressure compressor (12) and the charge-air main cooler (14) is connected downstream of the high-pressure compressor (12), are provided, which are hydraulically decoupled by means of at least one heat exchanger via which the first (20) and the second (21) cooling circuit are in thermal contact, and
wherein, in a working medium contained in the second cooling circuit (21), an at least partial phase transition can be effected during an operating phase of the cooling system,
**characterized**
**in that**, in the second cooling circuit (21), at least one high-temperature circuit is provided which can be operated at a higher temperature level than at least one low-temperature circuit of the second cooling circuit (21), and
**in that**, in the high-temperature circuit, a high-temperature heat exchanger (15a) is provided which can be flowed through by the working medium and which can be cooled by ambient air, and, in the low-temperature circuit, a low-temperature heat exchanger (15b) is provided which can be flowed through by the working medium and which can be cooled by ambient air.

2. The drive unit according to Claim 1, **characterized in that** a first working medium is contained in the at least one first cooling circuit (20) and a second working medium is contained in the second cooling circuit (21), wherein the first and the second working medium have different physical and/or chemical characteristics.

3. The drive unit according to Claim 1 or 2, **characterized in that** an oil cooler (24) is provided which is thermally coupled to the at least one first cooling circuit (20).

4. The drive unit according to any of Claims 1 to 3, **characterized in that** the exhaust-gas cooler (9) has an exhaust-gas recirculation cooling unit which is arranged between the exhaust-gas discharge arrangement and the charge-air supply arrangement such that, by means of the exhaust-gas recirculation cooling unit, heat can be transferred from an exhaust-gas partial stream diverted out of the exhaust-gas discharge arrangement to the second cooling circuit (21) before said exhaust-gas partial stream is introduced into the charge-air supply arrangement.

5. The drive unit according to any of Claims 1 to 4, **characterized in that**, in the second cooling circuit (21), there is provided a working medium conveying unit (16, 22, 30) which can be controlled in closed-loop fashion as a function of at least one operating parameter of the cooling system.

6. The drive unit according to any of Claims 1 to 5, **characterized in that**, in the first (20) and the second (21) cooling circuit, operation can be carried out at different temperature levels.

7. The drive unit according to any of Claims 2 to 6, **characterized in that** the second working medium contained in the second cooling circuit (21), or at least one component of the second working medium, has a lower evaporation temperature than the working medium contained in the first working circuit (20).

8. The drive unit according to any of Claims 1 to 7, **characterized in that**, in the second cooling circuit (21), there is provided a heat engine (19) which, during the operating phase of the cooling system, can be charged with working medium which has been at least partially changed into a vapour phase.

9. The drive unit according to Claim 8, **characterized in that** the heat engine (19) is a turbine system or an expander unit.

10. The drive unit according to Claim 8 or 9, **characterized in that** the heat engine is operatively connected to the internal combustion engine (10).

11. The drive unit according to any of Claims 8 to 10, **characterized in that** the heat engine is operatively connected via a crankshaft or via a belt drive to the internal combustion engine (10).

12. The drive unit according to any of Claims 1 to 11, **characterized in that** the second working medium contained in the second cooling circuit (21) has an ammonia-water mixture.

13. The drive unit according to any of Claims 1 to 11, **characterized in that** the second working medium contained in the second cooling circuit (21) has a hydrocarbon compound.

14. The drive unit according to any of Claims 1 to 11, **characterized in that** the second working medium contained in the second cooling circuit (21) has perfluoro-n-pentane (C_{S}F₁₂).

## Revendications

1. Unité d'entraînement d'un véhicule automobile, qui dispose d'un moteur à combustion interne (10), d'une arrivée d'air de suralimentation présentant un compresseur basse pression (11), un compresseur haute pression (12) et une unité de refroidissement d'air de suralimentation (13, 14), et d'une conduite d'évacuation de gaz d'échappement au moyen de laquelle les gaz d'échappement formés dans le moteur à combustion interne (10) sont évacués, et qui présente un système de refroidissement doté d'au moins un circuit de refroidissement (1),
dans lequel au moins un premier circuit de refroidissement (20) et au moins un deuxième circuit de refroidissement (21), dans lequel sont disposés au moins un refroidisseur de gaz d'échappement (9) intégré dans la conduite d'évacuation de gaz d'échappement et l'unité de refroidissement d'air de suralimentation (13, 14), sont prévus, l'unité de refroidissement d'air de suralimentation présentant un refroidisseur intermédiaire d'air de suralimentation (13) et un refroidisseur principal d'air de suralimentation (14) qui sont couplés thermiquement audit au moins un deuxième circuit de refroidissement (21) de telle sorte que dans la direction de flux de l'air de suralimentation le refroidisseur intermédiaire d'air de suralimentation (13) est disposé entre le compresseur basse pression (11) et le compresseur haute pression (12), et le refroidisseur principal d'air de suralimentation (14) est placé en aval du compresseur haute pression (12), lesdits circuits de refroidissement étant découplés hydrauliquement au moyen d'au moins un échangeur thermique par lequel le premier (20) et le deuxième (21) circuit de refroidissement sont en contact thermique, et
dans lequel, pour un fluide de travail contenu dans le deuxième circuit de refroidissement (21), une transition de phase au moins partielle peut être provoquée pendant une phase de fonctionnement du système de refroidissement,
**caractérisée en ce que**
dans le deuxième circuit de refroidissement (21), au moins un circuit haute température est prévu qui peut fonctionner à un niveau de température plus élevé qu'au moins un circuit basse température du deuxième circuit de refroidissement (21), et
dans le circuit haute température, un échangeur thermique haute température (15a) pouvant être traversé par le fluide de travail et refroidi par l'air ambiant est prévu, et dans le circuit basse température, un échangeur thermique basse température (15b) pouvant être traversé par le fluide de travail et refroidi par l'air ambiant est prévu.

2. Unité d'entraînement selon la revendication 1, **caractérisée en ce que** dans ledit au moins un premier circuit de refroidissement (20), un premier fluide de travail est contenu, et dans le deuxième circuit de refroidissement (21), un deuxième fluide de travail est contenu, le premier et le deuxième fluide de travail présentant des propriétés physiques et/ou chimiques différentes.

3. Unité d'entraînement selon la revendication 1 ou 2, **caractérisée en ce qu'**un refroidisseur d'huile (24) est prévu qui est couplé thermiquement audit au moins un premier circuit de refroidissement (20).

4. Unité d'entraînement selon l'une quelconque des revendications 1 à 3, **caractérisée en ce que** le refroidisseur de gaz d'échappement (9) dispose d'une unité de recyclage de gaz d'échappement qui est disposée entre la conduite d'évacuation de gaz d'échappement et l'arrivée d'air de suralimentation de telle sorte que l'unité de recyclage de gaz d'échappement permet de transférer au deuxième circuit de refroidissement (21) de la chaleur provenant d'un flux partiel de gaz d'échappement dérivé de la conduite d'évacuation de gaz d'échappement avant introduction dans l'arrivée d'air de suralimentation.

5. Unité d'entraînement selon l'une quelconque des revendications 1 à 4, **caractérisée en ce que** dans le deuxième circuit de refroidissement (21), une unité de refoulement de fluide de travail (16, 22, 30) est prévue qui peut être régulée en fonction d'au moins un paramètre de fonctionnement du système de refroidissement.

6. Unité d'entraînement selon l'une quelconque des revendications 1 à 5, **caractérisée en ce que** le premier (20) et le deuxième (21) circuit de refroidissement peuvent fonctionner à différents niveaux de température.

7. Unité d'entraînement selon l'une quelconque des revendications 2 à 6, **caractérisée en ce que** dans le deuxième fluide de travail contenu dans le deuxième circuit de refroidissement (21), ou au moins un composant du deuxième fluide de travail, présente une température d'évaporation inférieure à celle du fluide de travail contenu dans le premier circuit de travail (20) .

8. Unité d'entraînement selon l'une quelconque des revendications 1 à 7, **caractérisée en ce que** dans le deuxième circuit de refroidissement (21), un moteur thermique (19) est prévu qui, pendant la phase de fonctionnement du système de refroidissement, peut être alimenté en fluide de travail au moins partiellement passé à une phase vapeur.

9. Unité d'entraînement selon la revendication 8, **caractérisée en ce que** le moteur thermique (19) est une installation de turbines ou une unité d'expansion.

10. Unité d'entraînement selon la revendication 8 ou 9, **caractérisée en ce que** le moteur thermique est en relation active avec le moteur à combustion interne (10) .

11. Unité d'entraînement selon l'une quelconque des revendications 8 à 10, **caractérisée en ce que** le moteur thermique est en relation active avec le moteur à combustion interne (10) par l'intermédiaire d'un vilebrequin ou d'un entraînement par courroie.

12. Unité d'entraînement selon l'une quelconque des revendications 1 à 11, **caractérisée en ce que** le deuxième fluide de travail contenu dans le deuxième circuit de refroidissement (21) présente un mélange ammoniac-eau.

13. Unité d'entraînement selon l'une quelconque des revendications 1 à 11, **caractérisée en ce que** le deuxième fluide de travail contenu dans le deuxième circuit de refroidissement (21) présente un composé hydrocarboné.

14. Unité d'entraînement selon l'une quelconque des revendications 1 à 11, **caractérisée en ce que** le deuxième fluide de travail contenu dans le deuxième circuit de refroidissement (21) présente du n-perfluoropentane (C₅F₁₂).
